Europäisches Patentamt

European Patent Office

Office européen des brevets

(11) Veröffentlichungsnummer: **0 367 921**

**A2**

## (12) EUROPÄISCHE PATENTANMELDUNG

(21) Anmeldenummer: 89115223.3

(51) Int. Cl.5: **G07D 5/08, G07F 3/02**

(22) Anmeldetag: 18.08.89

(30) Priorität: 07.11.88 CH 4138/88

(43) Veröffentlichungstag der Anmeldung:
16.05.90 Patentblatt 90/20

(84) Benannte Vertragsstaaten:
AT CH DE FR GB IT LI

(71) Anmelder: **ASCOM AUTELCA AG**
**Worbstrasse 201**
**CH-3073 Gümligen(CH)**

(72) Erfinder: **Umhang, Jürg**
**Länggasse 13**
**CH-3600 Thun(CH)**

(74) Vertreter: **Keller, René, Dr. et al**
**Patentanwälte Dr. René Keller & Partner**
**Postfach 12**
**CH-3000 Bern 7(CH)**

(54) **Einrichtung zur Prüfung von Münzen.**

(57) Für jede anzunehmende Münzsorte ist wenigstens ein Annahmebereich (30) gespeichert, der auf ein Koordinatensystem (X, Y) bezogen ist, dessen Koordinaten je einer Münzeigenschaft zugeordnet sind. Eine Münze ist hinsichtlich diese Münzeigenschaften annehmbar, wenn der durch die diesen Eigenschaften zugeordneten Koordinaten bestimmte Punkte im Annahmebereich (30) liegt.

Fig.1

EP 0 367 921 A2

## Einrichtung zur Prüfung von Münzen

Die Erfindung bezieht sich auf eine Einrichtung zur Prüfung von Münzen. Solche Einrichtungen werden insbesondere in Verkaufs- und Dienstleistungsautomaten verwendet, um zu verhindern, dass deren Leistung missbräuchlich durch Münzen anderer als der dafür vorgesehenen Münzsorte oder -sorten erlangt wird.

Bekannte Einrichtungen dieser Art, z. B. nach EP-A 213 283, haben für mehrere Eigenschaften jeder anzunehmenden Münzsorte je einen linearen, eindimensionalen Annahmebereich mit einem oberen und einem unteren Grenzwert, wobei eine Münze hinsichtlich der betreffenden Eigenschaft als annehmbar festgestellt wird, wenn das Signal der für diese Eigenschaft vorgesehenen Prüfstation zwischen diesen Grenzwerten liegt. Trifft das für alle Prüfsignale, also für alle geprüften Eigenschaften zu, so wird die Münze angenommen. Solche Annahmebereiche mit Grenzwerten sind wegen der Toleranzen der Münzeigenschaften und der begrenzten Genauigkeit der Münzprüfung notwendig. Dabei ist es unvermeidlich, dass Annahmebereiche für dieselbe Münzeigenschaft verschiedener anzunehmender und nicht anzunehmender Münzsorten ganz oder teilweise zusammenfallen. Das Risiko mangelnder Unterscheidbarkeit verschiedener anzunehmender Münzsorten voneinander und von nicht anzunehmenden Münzsorten kann auch durch Prüfung mehrerer Münzeigenschaften nur begrenzt vermieden werden.

Hier will die Erfindung Abhilfe schaffen. Durch die Erfindung, wie sie im Patentanspruch 1 gekennzeichnet ist, wird die Aufgabe gelöst, einen Münzprüfer mit verbessertem Unterscheidungsvermögen zu schaffen. Dabei geht die Erfindung davon aus, dass die Prüfsignale verschiedener Münzeigenschaften nicht voneinander unabhängig, sondern statistisch korreliert sind. Das ergab sich aus der Erfindung zugrunde liegenden Feststellungen und kann auf dem Herstellungsverfahren, der Art der dabei verwendeten Einrichtungen und der Art der Prüfstationen beruhen, z. B. beeinflusst bei der üblichen induktiven Münzprüfung die Münzlegierung die Prüfsignale für alle Münzeigenschaften.

Die durch die Erfindung erzielten Vorteile sind im wesentlichen darin zu sehen, dass durch Ausnutzung der statistisch festgestellten Korrelationen sogar Münzsorten voneinander unterschieden werden können, bei denen alle Eigenschaften gleicher Art in teilweise gleichen eindimensionalen Bereichen liegen. Diese Möglichkeit beruht darauf, dass nicht - wie bisher - geprüft wird, ob die Prüfsignale je zwischen einer oberen und einer unteren Grenze liegen, wobei der Annahmebereich linear ist. Vielmehr wird geprüft, ob jeweils ein durch mehrere Prüfsignale als Koordinaten in einem Koordinatensystem bestimmter Punkt in einem empirisch ermittelten Annahmebereich liegt, wobei der Annahmebereich entsprechend dem Koordinatensystem mehrdimensional ist.

Die Erfindung wird im folgenden anhand nur einen Ausführungsweg darstellender Zeichnungen näher erläutert. Es zeigen

Fig. 1 eine Seitenansicht einer Münzführung mit vier Prüfsonden,

Fig. 2 einen Querschnitt nach der Linie II-II in Fig. 1,

Fig. 3 einen Uebersichtsschaltplan einer Einrichtung zum Prüfen von Münzen und

Fig. 4 bis 6 Diagramme zur Erläuterung der Wirkungsweise der Einrichtung.

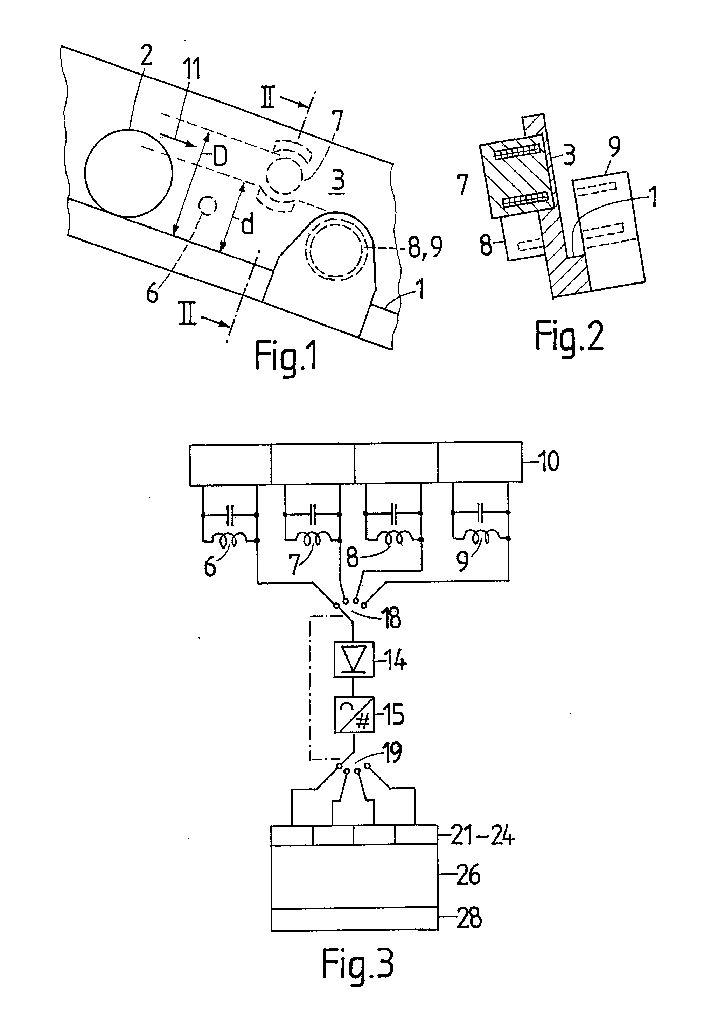

Die Münzführung nach Fig. 1 und 2 hat eine Rollbahn 1 mit Gefälle für die zu prüfende Münze 2 und eine Führungsfläche 3, die so steil ist, dass eine auf der Rollbahn 1 rollende Münze mit ihrer ganzen Vorder- oder Rückseite dicht an der Führungsfläche 3 gleitet. Die dargestellte Münzführung ist für anzunehmende Münzen, desen Durchmesser grösser als d und kleiner als D ist, ausgeführt. Mit ihr werden die Prägungstiefe, der Durchmesser, die Legierung und die Dicke der Münze je mittels einer induktiven Sonde 6, 7, 8 bzw. 9 geprüft.

Die Sonden 6-9 haben Schalenkerne, wie in Fig. 1 und 2 bei den Sonden 7, 8 und 9 ersichtlich. Die Prägungssonde 6 hat einen verhältnismässig kleinen Durchmesser, um auf die die Prägung bildenden Vertiefungen auch kleiner Teile der Münzoberfläche anzusprechen. Bei der Durchmessersonde 7 ist der Schalenmantel in Münzlaufrichtung 11 vorn und hinten abgeschnitten. Das ermöglicht einen kleineren Abstand von der benachbarten Sonde 6 und den benachbarten Sonden 8 und 9, letztere sind koaxial angeordnet.

Die Sonden 6-9 werden zur Erzeugung der Prüfsignale hochfrequent erregt. Zu diesem Zwecke kann jede Sonde die Schwingkreisspule einer nicht näher dargestellten Oszillatorschaltung 10 (Fig. 3) sein. Die Frequenzen sind zweckmässig je nach der zu prüfenden Münzeigenschaft verschieden, z. B. 247 kHz für die Prägungssonde 6 und die Dickensonde 9, 230 kHz für die Durchmessersonde 7. Für die Legierungssonde 8 ist eine tiefere Frequenz, z. B. 120 kHz zweckmässig, bei der das magnetische Wechselfeld der Sonde tiefer in den Münzkörper eindringt, so dass der Einfluss der magnetischen und elektrischen Eigenschaften der Legierung auf das Prüfsignal grösser und der Einfluss der Prägungstiefe kleiner ist.

Die Sonden 6, 8 und 9 sind in einem solchen Abstand von der Rollbahn 1 angeordnet, dass ihre Stirnseite von einer Münze, die auf der Rollbahn 1 rollt, vorübergehend vollständig überdeckt wird. Dabei nimmt die Hochfrequenzspannung an der Sonde vorübergehend ab. Das dadurch auftretende Minimum ist bei der Sonde 9 die einen solchen Abstand von der Führungsfläche 3 hat, dass dikkere Münzen ihr näher und dünnere Münze ihr weniger nahe kommen, ein Mass der Dicke der Münze, bei der Sonde 8 ist das Minimum charakteristisch für die Münzlegierung. Der Topfkern der Sonde 7 ist etwa im Abstand d von der Rollbahn, sein Durchmesser ist D - d, so dass diese Sonde von Münzen, deren Durchmesser grösser als d und kleiner als D ist, in einem vom Durchmesser abhängigen Masse beeinflusst wird. Dabei ist das Minimum der Hochfrequenzspannung ein Mass des Münzdurchmessers. Eine an der Prägungssonde 6 vorbeirollende Münze bewirkt einen zeitlich vorübergehend wellenförmigen Verlauf der Hochfrequenzspannung. Die Spannungsdifferenz zwischen den Wellenbergen und den Wellentälern ist dabei ein Mass der Prägungstiefe. Die an den Sonden 7-9 auftretenden Spannungsminima und die an der Sonde 6 auftretende Spannungsdifferenz sind die den verschiedenen Münzeigenschaften entsprechenden Prüfsignale, deren Auswertung ergibt, ob die Münze zu einer anzunehmenden Münzsorte gehört.

Die zu prüfende Münze 2 beeinflusst nacheinander die Sonden 6 und 7, dann gleichzeitig die Sonden 8 und 9, und erzeugt dabei vier Prüfsignale. Die Prüfsignale werden, wie aus Fig. 3 ersichtlich, nacheinander in einem Gleichrichter 14 gleichgerichtet, in einem Wandler 15 analog-digital gewandelt und je in einem von vier Zwischenspeichern 21-24 gespeichert. Dazu sind zwei synchron gesteuerte Umschalter 18 und 19 vorgesehen. Die Oszillatoren können dabei, wie an sich bekannt, dauernd gespeist oder, wie z. B. aus der eingangs erwähnten EP-A 0 213 283 bekannt, entsprechend der Zeitfolge der Prüfsignale nacheinander ein- und ausgeschaltet werden, wobei auch die Umschalter 18 und 19 gesteuert werden.

Eine Datenverarbeitungseinrichtung 26 prüft, ob die für die verschiedenen Eigenschaften (Prägungstiefe, Durchmesser, Legierung, Dicke) der Münze erhaltenen digitalen Prüfsignale in den Annahmebereichen, die für dieselben Eigenschaften aller anzunehmenden Münzsorten in einem Festwertspeicher 28 gespeichert sind, liegen. Wenn dies für alle Annahmebereiche einer Münzsorte der Fall ist, so gehört die Münze dieser anzunehmenden Münzsorte an, und die Datenverarbeitungseinrichtung 26 veranlasst in an sich bekannter Weise die Annahme der Münze bzw., wenn die Münze nicht anzunehmen ist, deren Rückgabe.

Die Annahmebereiche sind mehrdimensional, z. B. zweidimensional, wobei im vorliegenden Falle, in dem vier Münzeigenschaften geprüft werden, zwei Paare verschiedener Eigenschaften je einem von zwei Annahmebereichen zuzuordnen sind, aber bis zu sechs je einem Eigenschaftspaar zugeordnete Annahmebereiche möglich sind. Die Münze wird angenommen, wenn jedes der Eigenschafts-oder Datenpaare in den diesen Eigenschaften zugeordneten der im Festwertspeicher 28 für die anzunehmenden Münzsorten gespeicherten Annahmebereich liegt. Entsprechend kann bei dreidimensionalen Annahmebereichen verfahren werden. Infolge der Möglichkeiten der elektronischen Datenverarbeitung sind auch mehr als dreidimensionale Annahmebereiche verwendbar.

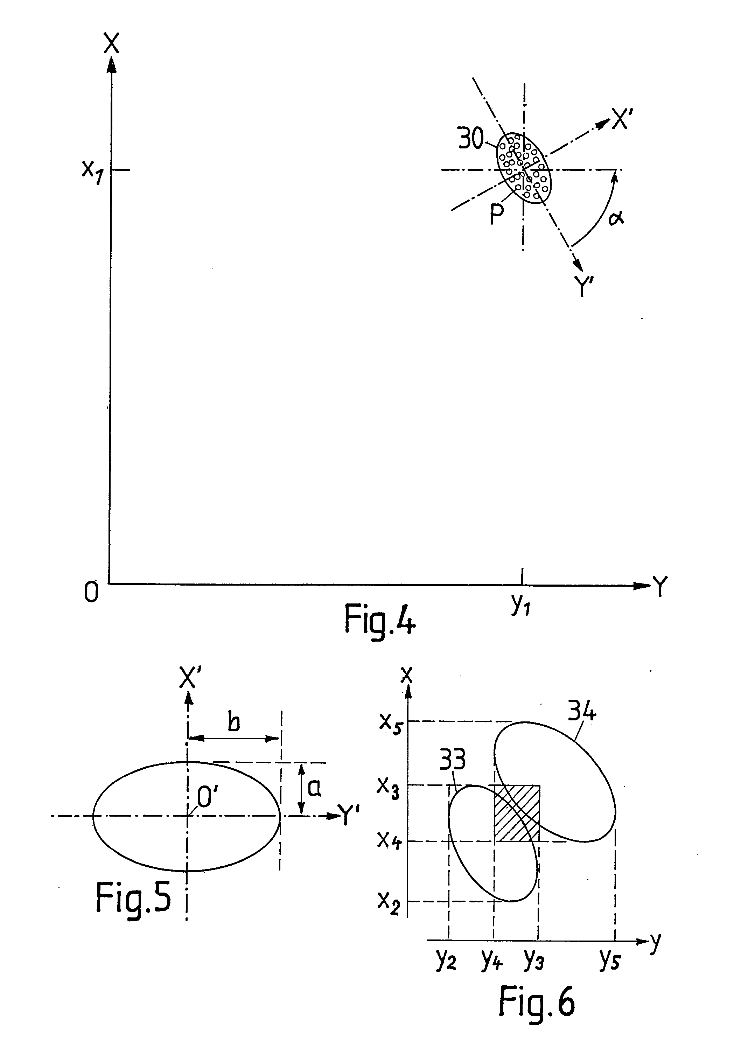

Im folgenden wird als Beispiel ein zweidimensionaler, also zwei verschiedenen Münzeigenschaften zugeordneter Annahmebereich anhand der Fig. 4 erläutert. Von einer Vielzahl von Münzen der betreffenden, anzunehmenden Münzsorte werden in der Einrichtung zwei Eigenschaften geprüft. Dabei wird von jedem einzelnen Münzexemplar ein Datenpaar erhalten. In ein Koordinatensystem, dessen Abszissenachse (Y) der einen und dessen Ordinaten achse (X) der anderen der beiden Münzeigenschaften zugeordnet ist, wird für jedes der geprüften Münzexemplare ein in Fig. 4 durch einen kleinen Kreis dargestellter Punkt P eingetragen, dessen Koordinaten x und y den Daten des mit diesem Münzexemplar erhaltenen Datenpaares entsprechen. Dabei wird eine Menge Punkte P erhalten, deren Verteilung auf der Streuung der gemessenen Daten und deren Korrelation beruht. Die Umhüllende dieser Punktmenge ist im Beispiel annähernd eine Ellipse 30, deren Ellipsenachsen in einem Winkel alpha zu den Koordinatenachsen X, Y verlaufen, und deren Achsenschnittpunkt zum Nullpunkt 0 des Koordinatensystems X, Y um $x_1$ und $y_1$ verschoben ist. Diese Ellipse 30 ist die Grenze des diesen beiden Münzeigenschaften zugeordneten Annahmebereichs. Damit die Datenverarbeitungseinrichtung 26 numerisch prüfen kann, ob das Datenpaar x, y einer zu prüfenden Münze im Annahmebereich liegt, die Münze also hinsichtlich dieser beiden Daten anzunehmen ist, ist die Ellipse 30 als eine auf das Koordinatensystem X, Y bezogene Formel im Festwertspeicher 28 gespeichert.

Bezogen auf ein Koordinatensystem $X'$, $Y'$, dessen Achsen in Richtung der Ellipsenachsen (Halbachsen a und b, Fig. 5) verlaufen und dessen Nullpunkt $0'$ im Mittelpunkt der Ellipse 30 liegt, gilt die bekannte Ellipsengleichung

$$x'^2/a^2 - y'^2/b^2 = 1, \qquad (1)$$

wobei a und b die Halbachsen der Ellipse bezeichnen. Bezogen auf das Koordinatensystem X, Y, auf das sich die Prüfdaten (digitale Prüfsignale) x und y beziehen, ist

$$x' = (x - x_1) \cos\alpha + (y - y_1) \sin\alpha, \qquad (2)$$

$$y' = (y - y_1) \cos\alpha - (x - x_1) \sin\alpha, \qquad (3)$$

Dies folgt aus einer Koordinatentransformation durch Parallelverschiebungen um $x_1$ und $y_1$ und Drehung um den Winkel alpha.

Die linke Seite der Gleichung (1) mit den Werten für $x_1$ und $y_1$ nach den Gleichungen (2) und (3) wird im Festwertspeicher 28 als Formel für den Annahmebereich für diese beiden Münzeigenschaften gespeichert. Die Datenverarbeitungseinrichtung 26 berechnet den Wert, der sich aus dieser Formel mit den für diese Münzeigenschaften erhaltenen Prüfsignalen x und y ergibt. Ist dieser Wert kleiner als eins, so ist die Münze hinsichtlich dieser beiden Eigenschaften annehmbar.

Die Grenze des Annahmebereichs ist nicht notwendig eine Ellipse, sie wird bei der statistisch und durch die Korrelation gegebenen Verteilung der Punkte P unter Berücksichtigung vom im Koordinatensystem benachbarten Annahmebereichen anderer anzunehmender Münzsorten und anderer Münzsorten, die nicht angenommen werden sollen, gewählt.

Werden, wie im vorliegenden Falle, vier Münzeigenschaften geprüft und zwei dieser Münzeigenschaften ein erster und den anderen beiden ein zweiter, zweidimensionaler Annahmebereich zugeordnet, so wird die Grenze jeder dieser Bereiche wie vorstehend erläutert gewählt und bei der Auswertung ebenso wie vorstehend erläutert vorgegangen. Eine Münze ist dann annehmbar, wenn sowohl der den zwei Münzeigenschaften zugeordnete Punkt im ersten als auch der den anderen beiden Münzeigenschaften zugeordnete Punkt im zweiten Annahmebereich einer anzunehmenden Münze liegt. Das gilt entsprechend, wenn z. B. drei oder je drei Münzeigenschaften ein bzw. je ein dreidimensionaler Annahmebereich zugeordnet wird.

Fig. 6 zeigt den wesentlichen durch die Erfindung erreichten Vorteil im Vergleich zum Stand der Technik in einer Fig. 4 entsprechenden Darstellung. Zu einer annehmbaren Münzsorte sind für eine Münzeigenschaft der lineare (eindimensionale) Annahmebereich $x_2$ bis $x_3$ und für eine andere Münzeigenschaft der ebenfalls lineare (eindimensionale) Annahmebereich $y_2$ bis $y_3$, für eine zweite anzunehmende Münzsorte sind entsprechend die Annahmebereiche $x_4$ bis $x_5$ und $y_4$ bis $y_5$ gespeichert. Eine Münze, deren eine Eigenschaft zwischen $x_3$ und $x_4$ und deren andere Eigenschaft zwischen $y_3$ und $y_4$ liegt, würde mit den linearen Annahmebereichen nach dem Stand der Technik fälschlicherweise sowohl als erste als auch als zweite Münzsorte "erkannt". Im Bereiche des schraffierten Vierecks besteht nach dem Stande der Technik keine Unterscheidungsmöglichkeit. Mit den zweidimensionalen, auf Korrelation beruhenden beiden Annahmebereichen 33 und 34 sind dieselben beiden Münzsorten mit denselben linearen Annahmebereichen zuverlässig voneinander unterscheidbar.

## Ansprüche

1. Einrichtung zur Prüfung von Münzen, mit mehreren Prüfstationen (6-9) zur Erzeugung verschiedenen Münzeigenschaften zugeordneter Prüfsignale, dadurch gekennzeichnet, dass für die oder jede anzunehmende Münzsorte die Grenze (30) mindestens eines mehrdimensionalen, auf ein Koordinatensystem (X, Y) mit je einer Münzeigenschaft zugeordneten Koordinaten bezogenen Annahmebereichs in einem Festwertspeicher (28) gespeichert ist; dass jeder Annahmebereich (30) eine Menge Punkte (P) umfasst, wobei die Koordinaten jedes dieser Punkte (P) als Prüfsignale eines Exemplars eine Vielzahl von Exemplaren der anzunehmenden Münzsorte erhalten sind; und dass eine Datenverarbeitungseinrichtung (26) die Annahme einer Münze auslöst, wenn in dem bzw. jedem der Koordinatensysteme der durch die Prüfsignale bestimmte Punkt im Annahmebereich liegt.

2. Einrichtung nach Anspruch 1, dadurch gekennzeichnet, dass die Grenze (30) wenigstens eines Annahmebereichs als eine sie in bezug auf das Koordinatensystem (X, Y) definierende Formel gespeichert ist.

3. Einrichtung nach Anspruch 1, dadurch gekennzeichnet, dass die Grenze (30) wenigstens eines Annahmebereichs als eine sie in bezug auf ein durch Transformation aus dem Koordinatensystem (X, Y) hervorgegangenes, transformiertes Koordinatensystem $(X', Y')$ definierende Formel gespeichert ist; und dass die Datenverarbeitungseinrichtung (26) die Annahme einer Münze auslöst, wenn im transformierten Koordinatensystem $(X', Y')$ der durch die entsprechend transformierten Prüfsignale bestimmte Punkt im Annahmebereich liegt.

4. Einrichtung nach einem der Ansprüche 1 bis 3, dadurch gekennzeichnet, dass die Grenze wenigstens eines Annahmebereichs wenigstens annähernd eine Ellipse (30) ist.

5. Einrichtung nach einem der Ansprüche 1 bis 3, gekennzeichnet durch einen Analog-Digital-Wandler (15) für die Prüfsignale und eine digitale Datenverarbeitungseinrichtung (26).

Fig.1

Fig.2

Fig.3

Fig.4

Fig.5

Fig.6